# EUROPÄISCHE PATENTANMELDUNG

(11) **EP 4 763 480 A1**
(43) Veröffentlichungstag der Anmeldung: **24.06.2026**
(21) Anmeldenummer: 24221455.9
(22) Anmeldetag: 19.12.2024
(51) Int. Cl.: B29C 64/135, B29C 64/268, B33Y 10/00, B33Y 30/00

(54) **VERFAHREN UND VORRICHTUNG ZUR LITHOGRAPHIEBASIERTEN GENERATIVEN FERTIGUNG EINES BAUTEILS**

(71) Anmelder: UpNano GmbH, 1030 Wien (AT)
(72) Erfinder: Gruber, Peter, 1140 Wien (AT); Scheucher, Michael, 1130 Wien (AT)
(74) Vertreter: SONN Patentanwälte GmbH & Co KG

(57) **Zusammenfassung**

Verfahren zur lithographiebasierten generativen Fertigung eines dreidimensionalen Bauteils, bei dem ein von einer elektromagnetischen Strahlungsquelle (3) ausgesendeter Strahl mittels einer optischen Abbildungseinheit (12) auf einen Fokuspunkt innerhalb eines Materials (2) fokussiert wird, um eine Bellichtungsdosis in das Material (2) einzubringen, und der Fokuspunkt mittels eines der optischen Abbildungseinheit (12) in Strahlrichtung vorgeordneten Ablenksystems verlagert wird, und ein am Fokuspunkt jeweils befindliches Volumenelement des Materials (2) mittels Multiphotonenabsorption verfestigt wird, wobei die Verlagerung des Fokuspunkts eine erste Bewegungskomponente (18), nämlich eine insbesondere kontinuierliche Verlagerung entlang eines Hauptpfads umfasst, die von einer zweiten Bewegungskomponente (21), nämlich einer quer dazu verlaufenden, wiederholten Querbewegung überlagert wird, und dass die Belichtungsdosis während der Querbewegung moduliert wird.

## Beschreibung

Ein Verfahren zur Ausbildung eines Bauteils, bei dem die Verfestigung eines photosensitiven Materials mittels Multiphotonenabsorption vorgenommen wird, ist beispielsweise aus der DE 10111422 A1 bekannt geworden. Dazu strahlt man mit einem fokussierten Laserstrahl in das Bad des photosensitiven Materials ein, wobei die Bestrahlungsbedingungen für einen die Verfestigung auslösenden Mehrphotonenabsorptionsprozess nur in unmittelbarer Umgebung des Fokus erfüllt sind, sodass man den Fokus des Strahls nach Maßgabe der Geometriedaten des herzustellenden Formkörpers innerhalb des Badvolumens zu den zu verfestigenden Stellen führt.

Am jeweiligen Fokuspunkt wird hierbei ein Volumenelement des Materials verfestigt, wobei benachbarte Volumenelemente aneinanderhaften und das Bauteil durch nacheinander erfolgendes Verfestigen von benachbarten Volumenelementen aufgebaut wird. Beim Aufbau des Bauteils kann man schichtweise vorgehen, d.h. es werden zuerst Volumenelemente einer ersten Schicht verfestigt, bevor Volumenelemente einer nächsten Schicht verfestigt werden.

Bestrahlungseinrichtungen für MultiphotonenAbsorptionsverfahren umfassen eine Optik zum Fokussieren eines Laserstrahls sowie eine Ablenkeinrichtung zum Ablenken des Laserstrahls. Die Ablenkeinrichtung ist hierbei ausgebildet, um den Strahl nacheinander auf Fokuspunkte innerhalb des Materials zu fokussieren, die in ein und derselben, vorzugsweise senkrecht zur Einstrahlrichtung des Strahls in das Material verlaufenden Ebene liegen. In einem x,y,z-Koordinatensystem wird diese Ebene auch als x,y-Ebene bezeichnet. Die durch die Strahlablenkung in der x,y-Ebene entstandenen verfestigten Volumenelemente bilden eine Schicht des Bauteils aus. Um ein kontinuierliches Arbeiten der Ablenkeinrichtung zu ermöglichen, wird der Strahl zwischen der Verfestigung zweier aufeinanderfolgender Volumenelemente unterbrochen bzw. aus- und wieder eingeschaltet.

Für den Aufbau einer nächsten Schicht erfolgt eine Veränderung der Relativposition der Fokussieroptik relativ zum Bauteil in der z-Richtung, welche einer Einstrahlrichtung des wenigstens einen Strahls in das Material entspricht und senkrecht zur x,y-Ebene verläuft. Durch die zumeist motorisch erfolgende Verstellung der Fokussieroptik relativ zum Bauteil wird der Fokuspunkt in eine neue x,y-Ebene verlagert, welche in z-Richtung um die gewünschte Schichtdicke von der vorangehenden x,y-Ebene beabstandet ist.

Die Strukturierung eines geeigneten Materials mittels Multiphotonenabsorption bietet den Vorteil einer überaus hohen Strukturauflösung, wobei Volumenelemente mit minimalen Strukturgrößen von bis zu 50nm x 50nm x 50nm erzielbar sind. Bedingt durch das kleine Fokuspunktvolumen ist der Durchsatz eines solchen Verfahrens allerdings sehr gering, da z.B. für ein Volumen von lmm³ insgesamt mehr als 10⁹ Punkte belichtet werden müssen. Dies führt zu sehr langen Bauzeiten, was der Hauptgrund für den geringen industriellen Einsatz von Multiphotonenabsorptions-Verfahren ist.

Um den Bauteiledurchsatz zu erhöhen, ohne die Möglichkeit einer hohen Strukturauflösung zu verlieren, wurde bereits vorgeschlagen, das Volumen des Fokuspunkts während des Aufbaus des Bauteils zu variieren, sodass das Bauteil aus verfestigten Volumenelementen unterschiedlichen Volumens aufgebaut wird. Durch das variable Volumen des Fokuspunktes sind (bei kleinem Fokuspunktvolumen) hohe Auflösungen möglich. Gleichzeitig ist (bei großem Fokuspunktvolumen) eine hohe Schreibgeschwindigkeit (gemessen in mm³/h) erzielbar. Durch das Variieren des Fokuspunktvolumens kann also eine hohe Auflösung mit großem Durchsatz kombiniert werden. Die Variation des Fokuspunktvolumens kann dabei zum Beispiel so genutzt werden, dass im Inneren des aufzubauenden Bauteils ein großes Fokuspunktvolumen verwendet wird, um den Durchsatz zu erhöhen, und an der Oberfläche des Bauteils ein kleineres Fokuspunktvolumen zur Anwendung kommt, um die Bauteiloberfläche mit hoher Auflösung auszubilden. Eine Vergrößerung des Fokuspunktvolumens ermöglicht einen höheren Strukturierungsdurchsatz, da das in einem Belichtungsvorgang verfestigte Materialvolumen vergrößert wird. Um bei hohem Durchsatz eine hohe Auflösung beizubehalten, können kleine Fokuspunktvolumina für feinere Strukturen und Oberflächen, und größere Fokuspunktvolumina für grobe Strukturen und/oder zum Füllen von Innenräumen verwendet werden. Verfahren und Vorrichtungen zur Veränderung des Fokuspunktvolumens sind in der WO 2018/006108 A1 beschrieben.

Eine weitere Möglichkeit zur Erhöhung der Schreibgeschwindigkeit besteht darin, den Schreibstrahl mit Hilfe eines Strahlteilers in eine Mehrzahl von Schreibstrahlen aufzuteilen, die jeweils in das zu verfestigende Material fokussiert werden, sodass ein paralleles Verfestigen mehrerer Volumenelemente ermöglicht wird (Kelemen et al: "Parallel photopolymerisation with complex light pattners generated by diffractive optical elements", Optics Express, Vol. 15, No. 22, p. 14488-14497). Allerdings lassen sich die einzelnen Schreibstrahlen nicht unabhängig voneinander positionieren, sodass lediglich eine der Anzahl der Strahlen entsprechende Mehrzahl gleichartiger Bauteile herstellbar ist.

Im Bereich der Stereolithographie ist es aus der US 5,536,467 bekannt, eine Mehrzahl von Schreibstrahlen unabhängig voneinander anzusteuern, wobei jeder Schreibstrahl von einem eigenen Spiegel an die entsprechende Position im zu verfestigten Material abgelenkt wird. Nachteilig ist jedoch, dass die Ablenkeinrichtung mechanisch betätigte Spiegel umfasst, sodass die Scangeschwindigkeit begrenzt ist, und dass die dargestellte Vorrichtung nicht für die Verfestigung von Volumenelementen mittels Multiphotonenabsorption geeignet ist. Außerdem steigt der apparative Aufwand proportional zur Anzahl der unabhängig voneinander zu bewegenden Schreibstrahlen.

Weiters ist es aus der WO 2018/206161 A1 bekannt, die Belichtungsdosis eines Schreibstrahls während seiner Verlagerung so zu modulieren, dass entlang der Bewegungsrichtung des Schreibstrahls eine Mehrzahl von Volumenelementen verfestigt wird, wobei durch Variation der Belichtungsdosis z.B. mit Hilfe eines akustooptischen Modulators, die Größe bzw. das Volumen des verfestigten Volumenelements eingestellt werden kann, um in Randbereichen des herzustellenden Bauteils eine Annäherung an die gewünschte Außengeometrie zu verbessern (sog. "Grayscaling").

Die Erfindung zielt darauf ab, ein Verfahren und eine Vorrichtung zur lithographiebasierten generativen Fertigung eines dreidimensionalen Bauteils dahingehend weiterzuentwickeln, dass die Schreibgeschwindigkeit (gemessen in mm³/h) ohne Einschränkung der Bauteilgeometrie und mit geringem apparativen Aufwand noch weiter erhöht wird.

Zur Lösung dieser Aufgabe sieht ein erster Aspekt der Erfindung ein Verfahren zur lithographiebasierten generativen Fertigung eines dreidimensionalen Bauteils vor, bei dem ein von einer elektromagnetischen Strahlungsquelle ausgesendeter Strahl mittels einer optischen Abbildungseinheit auf einen Fokuspunkt innerhalb eines Materials fokussiert wird, um eine Belichtungsdosis in das Material einzubringen, und der Fokuspunkt mittels eines der optischen Abbildungseinheit in Strahlrichtung vorgeordneten Ablenksystems verlagert wird, und ein am Fokuspunkt jeweils befindliches Volumenelement des Materials mittels Multiphotonenabsorption verfestigt wird. Das Verfahren ist dadurch gekennzeichnet, dass die Verlagerung des Fokuspunkts eine erste Bewegungskomponente, nämlich eine insbesondere kontinuierliche Verlagerung entlang eines Hauptpfads umfasst, die von einer zweiten Bewegungskomponente, nämlich einer quer dazu verlaufenden, wiederholten Querbewegung überlagert wird, und dass die Belichtungsdosis während der Querbewegung moduliert wird.

Die Querbewegungskomponente kann mit einer deutlich höheren Geschwindigkeit ausgeführt werden als die Bewegungskomponente entlang des Hauptpfads. Dies liegt daran, dass die Querbewegung nur einen kleinen Verfahrweg aufweist und somit schnell oszillierend überlagert werden kann, wohingegen die Verlagerung entlang des Hauptpfads dafür ausgelegt ist, einen möglichst großen Bereich zu scannen. Die Geschwindigkeit der Querbewegungskomponente kann hierbei mindestens das Doppelte, vorzugsweise mindestens das Vierfache, vorzugsweise mindestens das Zehnfache der Geschwindigkeit der ersten Bewegungskomponente betragen.

Durch die Modulation der Belichtungsdosis während der schnellen Querbewegung können mehrere Volumenelemente nebeneinander verfestigt werden. Dies führt zu einer Vergrößerung der effektiv beschreibbaren Breite entlang des Hauptpfads, ohne die Verlagerungsgeschwindigkeit des Fokuspunkts entlang des Hauptpfads zu reduzieren. Somit kann bei gleichbleibender Scangeschwindigkeit ein breiterer Bereich des Materials parallel strukturiert werden, was die Schreibgeschwindigkeit (in mm³/h) signifikant erhöht. Beispielsweise können dadurch in einem Durchgang mehrere sich in Richtung der ersten Bewegungskomponente erstreckende, parallele Linien geschrieben werden. Durch geeignete Ansteuerung der Modulation der Belichtungsdosis kann die Anordnung der Volumenelemente beliebig gewählt werden. Im Fall der Erzeugung mehrerer paralleler Linien kann beispielsweise der Linienabstand frei gewählt werden. Dadurch kann zwischen einem feinen Schreibmodus, bei dem die Volumenelemente bzw. Linien nah aneinander liegen, und einem groben Schreibmodus, bei dem die Volumenelemente bzw. Linien weiter voneinander entfernt sind, gewechselt werden.

Die Modulation der Belichtungsdosis während der Querbewegung kann mit geeigneten optischen Einrichtungen, wie beispielsweise akustooptischen Modulatoren, sehr schnell, d.h. mit hoher Taktfrequenz, erfolgen. Bevorzugt kann die Taktfrequenz 30 MHz oder mehr betragen, d.h. die Belichtungsdosis kann 30 Millionen mal oder mehr je Sekunde verändert werden. Dadurch können die Belichtungsintervalle präzise gesteuert und an die hohe Geschwindigkeit der Querbewegung angepasst werden. Dies ermöglicht eine exakte Positionierung der verfestigten Volumenelemente und trägt zur Verbesserung der Strukturqualität bei.

Im Vergleich zu Ansätzen, die mehrere unabhängig voneinander zu bewegende Schreibstrahlen erfordern, zeichnet sich die vorliegende Erfindung durch einen geringen apparativen Mehraufwand aus. Es wird lediglich eine zusätzliche Querbewegungskomponente und eine Modulationseinheit für die Belichtungsdosis benötigt. Dies reduziert die Komplexität und die Kosten des Gesamtsystems, ohne die Leistungsfähigkeit zu beeinträchtigen und ohne dass die Leistung der Strahlungsquelle wesentlich erhöht werden muss.

Die Erfindung sieht vor, dass die wiederholten Querbewegungen entweder in gleicher Richtung ausgerichtet oder als wiederholte Hin- und Herbewegung ausgebildet sein können. Im ersten Fall erfolgt die Querbewegung stets in dieselbe Richtung, beispielsweise senkrecht zum Hauptpfad, wodurch der Strahl entlang einer Vielzahl paralleler, schräg zum Hauptpfad verlaufender Linien bewegt wird. Im zweiten Fall wird die Querbewegung als oszillierende Hin- und Herbewegung ausgeführt, sodass sich der Fokuspunkt abwechselnd in entgegengesetzte Richtungen quer zum Hauptpfad bewegt. Durch die Überlagerung der ersten Bewegungskomponente entlang des Hauptpfads mit der zweiten Bewegungskomponente der Hin- und Herbewegung ergibt sich eine Zick-Zack-Bewegung des Strahls.

Der Winkel, in dem die Linien zum Hauptpfad verlaufen, kann durch das Verhältnis der Geschwindigkeiten der beiden Bewegungskomponenten zueinander eingestellt werden. Je schneller die Querbewegung im Vergleich zur Geschwindigkeit der ersten Bewegungskomponente gewählt wird, desto steiler verlaufen die Linien, entlang derer der Strahl geführt wird. Durch die Anpassung des Geschwindigkeitsverhältnisses kann nicht nur die Ausrichtung der Linien, sondern auch der in Richtung des Hauptpfads gemessene Abstand der Linien bzw. der Volumenelemente gezielt gesteuert werden.

Die Ausrichtung der Linien, entlang welcher der Strahl geführt wird, kann aber auch durch die Richtung der Querbewegungskomponente eingestellt werden. Vorzugsweise erstreckt sich die Querbewegungskomponente im rechten Winkel zur Richtung des Hauptpfads. Alternativ kann die Querbewegungskomponente in einem spitzen Winkel zur Richtung des Hauptpfads ausgerichtet sein. Hierbei kann die Querbewegungskomponente im Vergleich zur Richtung des Hauptpfads rückwärts oder vorwärts gerichtet verlaufen. Im Falle einer rückwärts gerichtete Querbewegungskomponente kann der spitze Winkel zwischen der Richtung des Hauptpfads und der Querbewegungskomponente und die relative Geschwindigkeit der beiden Bewegungskomponenten so aufeinander abgestimmt sein, dass die resultierende Verlagerung des Strahls entlang von parallelen Querlinien verläuft, die senkrecht zum Hauptpfad verlaufen.

Eine bevorzugte Weiterbildung der Erfindung sieht vor, die Amplitude der Querbewegungskomponente zu variieren. Durch die Veränderung der Amplitude kann die Breite des Bereichs, der während eines Scans entlang des Hauptpfads verfestigt wird, dynamisch angepasst werden. Eine Vergrößerung der Amplitude führt zu einer breiteren Abdeckung des Materials senkrecht zum Hauptpfad, während eine Verringerung der Amplitude eine schmalere Verfestigungszone ermöglicht. Durch die gezielte Anpassung der Amplitude während des Schreibprozesses können Bereiche unterschiedlicher Breite mit einem einzigen Scan strukturiert werden. Die Amplitude kann bei Bedarf auch auf Null reduziert werden, um in herkömmlicher Weise eine Reihe von entlang des Hauptpfads angeordneten Volumenelementen zu erzeugen.

Eine weitere bevorzugte Weiterbildung der Erfindung besteht darin, die Querbewegung durch Ablenkung des Strahls mittels wenigstens eines akustooptischen Deflektors zu erzeugen. Akustooptische Deflektoren basieren auf dem Prinzip der Beugung des Lichts an periodischen Strukturen, die durch akustische Wellen in einem optischen Medium erzeugt werden. Durch Anlegen einer hochfrequenten Wechselspannung an einen Schallwandler wird eine Schallwelle in dem optischen Medium generiert, die zu einer periodischen Variation des Brechungsindex führt. Der einfallende Lichtstrahl wird an dieser Gitterstruktur gebeugt und in Abhängigkeit von der Frequenz und Amplitude der akustischen Welle abgelenkt. Akustooptische Deflektoren zeichnen sich durch sehr hohe Scangeschwindigkeiten und Präzision aus, wodurch sie ideal für die Erzeugung der schnellen Querbewegung geeignet sind. Im Gegensatz dazu kann die Bewegungskomponente entlang des Hauptpfads vorzugsweise mit einem Galvanometerscanner erzeugt werden. Galvanometerscanner verwenden bewegliche Spiegel, die über Galvanometerantriebe präzise ausgelenkt werden können, um den Strahl entlang des Hauptpfads zu führen.

Bei der Ablenkung eines Lichtstrahls mit einem akustooptischen Deflektor kann geschwindigkeitsabhängig eine Divergenz entstehen. Diese kann vorzugsweise dadurch verringert werden, dass der Strahl unmittelbar vor dem akustooptischen Deflektor derart konvergiert wird, dass eine vom akustooptischen Deflektor bewirkte Divergenz des Strahls zumindest teilweise, im Wesentlichen vollständig, kompensiert wird.

Akustooptische Deflektoren sind als Longitudinalwellen-AOD und als Transversalwellen-AOD bekannt. Vorzugsweise kommt im Rahmen der Erfindung wenigstens ein Longitudinalwellen-AOD zum Einsatz, d.h. dass im akustooptischen Deflektor eine akustische Longitudinalwelle erzeugt wird. Es hat sich gezeigt, dass der maximale Ablenkwinkel bei Longitudinalwellen-AODs im Allgemeinen zwar geringer ist als bei Transversalwellen-AODs, die Schallgeschwindigkeit bei Longitudinalwellen-AODs jedoch höher ist, wie z.B. bei AODs aus Tellurdioxid (TeO₂), wodurch sich eine höhere Ablenk- bzw. Scangeschwindigkeit ergibt.

Eine weitere bevorzugte Weiterbildung der Erfindung sieht vor, die Querbewegung durch Ablenkung des Strahls mittels zweier im Strahlengang hintereinander angeordneter akustooptischer Deflektoren zu erzeugen. Die Ablenkrichtungen der beiden Deflektoren sind dabei in einem Winkel, vorzugsweise rechten Winkel, zueinander ausgerichtet. Die resultierende Querbewegungskomponente des Strahls ergibt sich dann aus der Vektorsumme der beiden einzelnen Ablenkungen. Durch die Kombination der Ablenkwirkungen kann die Geschwindigkeit und Amplitude der Querbewegung im Vergleich zur Verwendung eines einzelnen Deflektors deutlich gesteigert werden, sodass breitere Bereiche mit einem einzigen Scan abgedeckt werden können.

Im Rahmen der Erfindung kann die Modulation der Belichtungsdosis zur Erzielung unterschiedlicher Effekte verwendet werden. Einerseits kann die Belichtungsdosis derart angepasst werden, dass der Abstand in Querrichtung zwischen aufeinanderfolgend ausgebildeten Volumenelementen variiert wird. Um dies zu erreichen, kann die Belichtungsdosis, z.B. die Strahlungsintensität, vorzugsweise pulsartig zwischen einem hohen und einem niedrigen Wert geändert werden. Durch Variation des Tastverhältnisses, also des Verhältnisses zwischen der Dauer des hohen Werts zur gesamten Periodendauer, kann die Anzahl der Volumenelemente pro Volumeneinheit im Bauteil gezielt eingestellt werden. Bei einem niedrigen Wert reicht die Belichtungsdosis am Fokuspunkt nicht aus, um eine Polymerisation des Materials durch Zwei- oder Multiphotonenabsorption auszulösen. Der niedrige Wert kann dabei so gewählt werden, dass im Wesentlichen keine Einstrahlung in das Material erfolgt. Durch geeignete Wahl des Tastverhältnisses können somit Bereiche mit unterschiedlicher Dichte an Volumenelementen erzeugt werden, was eine Anpassung der Bauteileigenschaften ermöglicht.

Andererseits kann die Belichtungsdosis auch derart moduliert werden, dass während der Querbewegung Volumenelemente unterschiedlichen Volumens ausgebildet werden. Durch Variation der Strahlungsintensität und/oder der Belichtungsdauer an verschiedenen Positionen entlang der Querbewegung können gezielt Volumenelemente mit unterschiedlicher Größe erzeugt werden. Diese Technik ermöglicht die Realisierung eines Graustufeneffekts (Grayscaling) innerhalb der verfestigten Struktur. Durch die Erzeugung von Volumenelementen mit abgestuften Größen können feine Detailstrukturen und Materialgradienten im Bauteil realisiert werden. Diese Weiterbildung eröffnet somit neue Möglichkeiten für die Herstellung von Bauteilen mit lokal angepassten Eigenschaften und einer hohen Auflösung der Strukturdetails.

Gegenüber herkömmlichen Grayscaling-Verfahren ermöglicht es die Erfindung, das Grayscaling auf Grund der überlagerten Querbewegung auf mehrere Linien auszudehnen.

Die beiden Arten der Modulation der Beldichtungsdosis können hierbei miteinander kombiniert werden, um während der Querbewegung eine Mehrzahl von Volumenelementen auszubilden und diese gleichzeitig in ihrem jeweiligen Volumen anzupassen.

Auf Grund der Möglichkeit, die Druckparameter, nämlich die Anzahl der Volumenelemente je Volumeneinheit, die Größe der Volumenelemente und die Anordnung der Volumenelemente entlang der Querbewegungsrichtung (d.h. den Linienabstand) unabhängig voneinander einzustellen, kann mit dem erfindungsgemäßen Verfahren eine im Wesentlichen quadratische Geometrie der Volumenelemente in der x-y-Ebene auch dann beibehalten werden, wenn einer der genannten Parameter verändert wird, ohne die Schreibgeschwindigkeit in mm³/h zu reduzieren. Bei herkömmlichen Verfahren ohne Überlagerung einer Querbewegung kann zwar die Dichte der Pixel in Schreibrichtung erhöht werden, wodurch die Ausdehnung der Volumenelemente in Schreibrichtung auf Grund der Überlappung aufeinanderfolgender Volumenelemente kleiner wird, allerdings bleibt die Breite der Volumenelemente gleich, sodass keine quadratische Geometrie erreicht wird. Eine quadratische Geometrie könnte durch Anpassung des Linienabstands und Reduzierung der Strahlungsintensität erreicht werden, wodurch sich jedoch die Schreibgeschwindigkeit verringern würde.

Die am Fokuspunkt in das Material eingebrachte Belichtungsdosis kann durch verschiedene Maßnahmen verändert werden. Eine besonders vorteilhafte Weiterbildung der Erfindung besteht darin, die Belichtungsdosis durch Veränderung der Strahlungsintensität des Strahls zu modulieren. Hierfür wird vorzugsweise ein akustooptischer Modulator eingesetzt, der eine präzise und schnelle Anpassung der Intensität ermöglicht. Akustooptische Modulatoren basieren auf dem Prinzip der Beugung des Lichts an einer akustischen Welle, die durch einen Schallwandler in einem optischen Medium erzeugt wird. Durch Anlegen einer hochfrequenten elektrischen Signals an den Schallwandler wird eine Schallwelle generiert, die zu einer periodischen Variation des Brechungsindex führt. Durch Veränderung der Amplitude des elektrischen Signals kann die Intensität des Lichtstrahls und damit die Belichtungsdosis präzise moduliert werden. Akustooptische Modulatoren zeichnen sich durch sehr hohe Schaltgeschwindigkeiten aus.

Alternativ oder zusätzlich kann die Belichtungsdosis beispielsweise durch Änderung der Belichtungszeit angepasst werden, indem die Verweildauer des Fokuspunkts entsprechend gesteuert wird. Eine längere Belichtungszeit führt zu einer höheren Dosis, während eine kürzere Belichtungszeit die Dosis verringert.

Eine weitere vorteilhafte Weiterbildung der Erfindung sieht vor, den Strahldurchmesser entlang des Strahlengangs gezielt zu verändern, um die Leistungsfähigkeit des Systems zu optimieren. Insbesondere kann der Strahldurchmesser beim Durchlaufen des akustooptischen Modulators (AOM) geringer gewählt werden als beim Durchlaufen des für die Erzeugung der Querbewegung vorgesehenen akustooptischen Deflektors (AOD). Diese Anpassung des Strahldurchmessers hat einen positiven Einfluss auf die Schaltfrequenz und die Reaktionszeit des AOMs. Ein geringerer Strahldurchmesser im AOM bedeutet, dass die Schallwelle eine kürzere Strecke zurücklegen muss, um den Strahl vollständig zu durchqueren. Dadurch verringert sich die Dauer, die der AOM benötigt, um den Strahl zu modulieren. Eine kürzere Wechselwirkungszeit ermöglicht wiederum eine höhere Schaltfrequenz, sodass die Intensität des Strahls schneller und präziser angepasst werden kann. Im Gegensatz dazu kann der Strahldurchmesser beim Durchlaufen des AODs größer sein, da hier die Anforderungen an die Schaltgeschwindigkeit weniger kritisch sind. Die Anpassung des Strahldurchmessers kann durch den Einsatz von Strahlaufweitungs- oder Strahlformungsoptiken oder durch eine Linse erreicht werden, die im Strahlengang zwischen dem AOM und dem AOD positioniert werden.

Bevorzugt wird das Bauteil schichtweise mit sich in einer x-y-Ebene erstreckenden Schichten aufgebaut, wobei der Wechsel von einer Schicht zu einer nächsten Schicht die Veränderung der Relativposition der optischen Abbildungseinheit relativ zum Bauteil in einer senkrecht zur x-y-Ebene verlaufenden z-Richtung umfasst. Die z-richtung entspricht hierbei im Wesentlichen der Einstrahlrichtung des Strahls.

Eine bevorzugte Verfahrensweise ergibt sich, wenn das Material auf einem Materialträger, wie z.B. in einer Wanne, vorliegt, und die Bestrahlung des Materials von unten durch den für die Strahlung zumindest bereichsweise durchlässigen Materialträger erfolgt. Hierbei kann eine Bauplattform in Abstand vom Materialträger positioniert und das Bauteil durch Verfestigen von zwischen der Bauplattform und dem Materialträger befindlichem Material auf der Bauplattform aufgebaut werden. Alternativ ist es aber auch möglich, die Bestrahlung des Materials von oben vorzunehmen.

Das Prinzip der Multiphotonenabsorption wird im Rahmen der Erfindung genutzt, um im photosensitiven Materialbad einen photochemischen Vorgang zu initiieren. Multiphotonenabsorptionsverfahren umfassen beispielsweise auch Verfahren der 2-Photonenabsorption. Als Folge der photochemischen Reaktion kommt es zur Veränderung des Materials in mindestens einen anderen Zustand, wobei es typischerweise zu einer Photopolymerisation kommt. Das Prinzip der Multiphotonenabsorption beruht darauf, dass der genannte photochemische Vorgang nur in jenen Bereichen des Strahlengangs stattfindet, in denen eine für die Multiphotonenabsorption ausreichende Photonendichte vorliegt. Die höchste Photonendichte tritt im Brennpunkt des optischen Abbildungssystems auf, sodass die Multiphotonenabsorption mit ausreichender Wahrscheinlichkeit nur im Fokuspunkt auftritt. Außerhalb des Brennpunktes ist die Photonendichte geringer, sodass die Wahrscheinlichkeit der Multiphotonenabsorption außerhalb des Brennpunktes zu gering ist, um eine unumkehrbare Veränderung des Materials durch eine photochemische Reaktion zu bewirken. Die elektromagnetische Strahlung kann in der verwendeten Wellenlänge weitestgehend ungehindert das Material passieren und nur im Fokuspunkt kommt es zu einer Interaktion zwischen photosensitivem Material und elektromagnetischer Strahlung. Das Prinzip der Multiphotonenabsorption ist beispielsweise in Zipfel et al, "Nonlinear magic: multiphoton microscopy in the biosciences", NATURE BIOTECHNOLOGY VOLUME 21 NUMBER 11 NOVEMBER 2003, beschrieben.

Als Quelle für die elektromagnetische Strahlung kann es sich vorzugsweise um einen kollimierten Laserstrahl handeln. Der Laser kann sowohl eine oder mehrere, feste oder variable Wellenlängen emittieren. Insbesondere handelt es sich um einen kontinuierlichen oder gepulsten Laser mit Pulslängen im Nanosekunden-, Pikosekunden- oder Femtosekunden-Bereich. Ein gepulster Femtosekundenlaser bietet dabei den Vorteil, dass eine geringere mittlere Leistung für die Multiphotonenabsorption benötigt wird.

Unter photosensitivem Material wird jedes unter Baubedingungen fließfähige oder feste Material verstanden, das durch Multiphotonenabsorption im Fokuspunktvolumen in einen zweiten Zustand übergeht - beispielsweise durch Polymerisation. Die Materialveränderung muss sich dabei auf das Fokuspunktvolumen und dessen direkte Umgebung begrenzen. Die Veränderung der Substanzeigenschaften kann dauerhaft sein und beispielsweise in einer Veränderung von einem flüssigen in einen festen Zustand bestehen, kann jedoch auch nur vorübergehend sein. Auch eine dauerhafte Veränderung kann im Übrigen reversibel oder nicht reversibel sein. Die Änderung der Materialeigenschaften muss nicht zwingend vollständig von einem in den anderen Zustand übergehen, sondern kann auch als Mischform beider Zustände vorliegen.

Der Strahl kann mittels eines Strahlteilers in wenigstens zwei Strahlen aufgeteilt werden, die parallel auf die erfindungsgemäße Weise verlagert werden, das heißt, dass die Verlagerung jeweils eine erste Bewegungskomponente, nämlich eine insbesondere kontinuierliche Verlagerung entlang eines Hauptpfads umfasst, die von einer zweiten Bewegungskomponente, nämlich einer quer dazu verlaufenden, wiederholten Querbewegung überlagert wird. Hierbei wird die Belichtungsdosis während der Querbewegung moduliert. Die Modulation der Belichtungsdosis kann hierbei vorzugsweise für die zwei oder mehr Strahlen gemeinsam erfolgen oder für jeden der zwei oder mehr Strahlen unabhängig von den jeweils anderen Strahlen. Im zweiteren Fall gelingt ein Parallelschreiben mit voneinander unabhängiger Anordnung der Volumenelemente.

Gemäß einem zweiten Aspekt stellt die Erfindung eine Vorrichtung zur lithographiebasierten generativen Fertigung eines dreidimensionalen Bauteils bereit, die insbesondere zur Durchführung eines Verfahrens nach dem ersten Aspekt der Erfindung geeignet ist. Die Vorrichtung umfasst einen Materialträger für ein verfestigbares Material und eine Bestrahlungseinrichtung, die zur ortsselektiven Bestrahlung des verfestigbaren Materials mit wenigstens einem Strahl ansteuerbar ist, wobei die Bestrahlungseinrichtung ein Ablenksystem und eine dem Ablenksystem nachgeordnete optische Abbildungseinheit umfasst, mit welcher der Strahl auf einen Fokuspunkt innerhalb des Materials fokussierbar ist, um eine Bellichtungsdosis in das Material einzubringen, und der Fokuspunkt mittels des Ablenksystems verlagerbar ist, wodurch jeweils ein am Fokuspunkt befindliches Volumenelement des Materials mittels Multiphotonenabsorption verfestigbar ist. Erfindungsgemäß weist das Ablenksystem ein erstes Ablenkmodul zur Erzeugung einer ersten Bewegungskomponente und ein zweites Ablenkmodul zur Erzeugung einer zweiten Bewegungskomponente der Verlagerung des Fokuspunkts auf, wobei die erste Bewegungskomponente eine insbesondere kontinuierliche Verlagerung entlang eines Hauptpfads ist, und die zweite Bewegungskomponente eine quer dazu verlaufende, wiederholte Querbewegung ist, und dass Mittel zur Modulierung der Belichtungsdosis während der Querbewegung vorgesehen sind.

Wie bereits im Zusammenhang mit dem erfindungsgemäßen Verfahren erwähnt, können die Mittel zur Modulierung der Belichtungsdosis vorzugsweise ausgebildet sein, um die Strahlungsintensität des Strahls zu verändern und insbesondere einen akustooptischen Modulator aufweisen. Die Mittel zur Modulierung der Belichtungsdosis, insbesondere der akustooptische Modulator, kann hierbei von einer Steuereinheit angesteuert werden.

Die Steuereinheit kann eingerichtet sein, die Belichtungsdosis derart zu modulieren, dass während der Querbewegung eine Mehrzahl von Volumenelementen ausgebildet wird.

Die Steuereinheit kann auch eingerichtet sein, die Belichtungsdosis derart zu modulieren, dass der Abstand zwischen aufeinanderfolgend ausgebildeten Volumenelementen variiert wird.

Die Steuereinheit kann auch eingerichtet sein, die Belichtungsdosis derart zu modulieren, dass die Volumenelemente entlang von parallelen Linien angeordnet werden, die parallel zum Hauptpfad verlaufen.

Die Steuereinheit kann auch eingerichtet sein, die Belichtungsdosis derart zu modulieren, dass während der Querbewegung Volumenelemente unterschiedlichen Volumens ausgebildet werden.

Die Steuereinheit kann vorzugsweise ausgebildet sein, um die Strahlungsintensität pulsartig zwischen einem hohen und einem niedrigen Wert zu ändern, wobei das Tastverhältnis variierbar ist, um die Anzahl der Volumenelemente pro Volumeneinheit im Bauteil zu verändern.

Die Steuereinheit kann vorzugsweise ausgebildet sein, um die Strahlungsintensität pulsartig zwischen einem hohen und einem niedrigen Wert zu ändern, um Volumenelemente ortsselektiv entsprechend der zu erzielenden Geometrie des Bauteils anzuordnen.

Das zweite Ablenkmodul weist vorzugsweise einen akustooptischen Deflektor auf, der von einer eigenen Steuereinheit oder von derselben Steuereinheit wie der akustooptische Modulator angesteuert werden kann.

Die Steuereinheit kann hierbei eingerichtet sein, um die Querbewegung als wiederholte Hin- und Herbewegung auszuführen und/oder um die Amplitude der Querbewegung, insbesondere der Hin- und Herbewegung, zu variieren.

Die Steuereinheit(en) des akustooptischen Modulators und des akustooptischen Deflektors können eingerichtet sein, um die Geschwindigkeit der Querbewegungskomponente relativ zur Geschwindigkeit der ersten Bewegungskomponente in Richtung des Hauptpfads aufeinander abzustimmen, um den Winkel der resultierenden Verlagerung relativ zum Hauptpfad einzustellen und/oder den in Richtung des Hauptpfads gemessenen Abstand zwischen aufeinander folgenden Querabschnitten der resultierenden Verlagerung einzustellen.

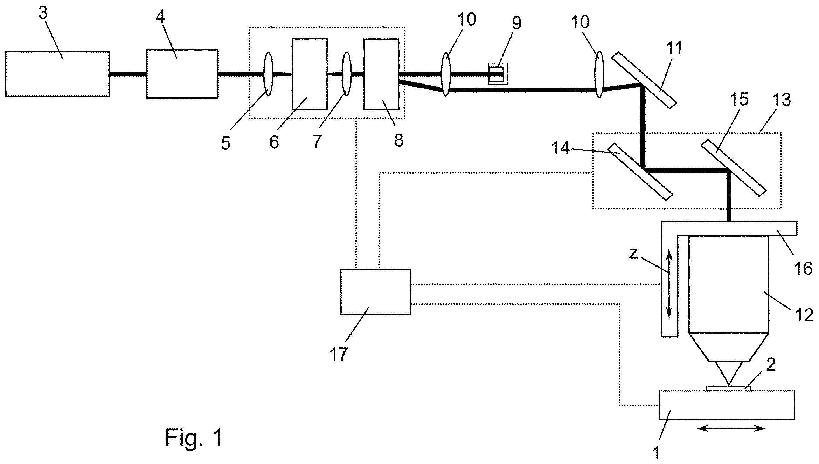

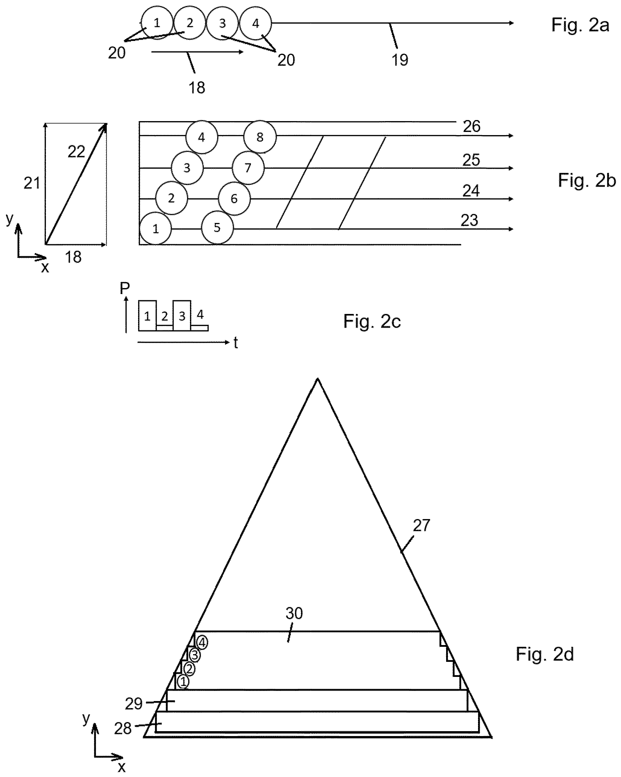

Die Erfindung wird nachfolgend anhand eines in der Zeichnung schematisch dargestellten Ausführungsbeispiels näher erläutert. In dieser zeigen Fig. 1 eine schematische Darstellung einer Ausführungsform der erfindungsgemäßen Vorrichtung und Fig. 2 eine schematische Darstellung der Verlagerung des Fokuspunkts und der Anordnung von Volumenelementen.

In Fig. 1 ist ein Träger mit 1 bezeichnet, auf welchem ein Bauteil aufgebaut werden soll. Der Träger 1 wird mit einem photopolymerisierbaren Material 2 beschichtet, in welches ein Laserstrahl fokussiert wird, wobei der Laserstrahl nacheinander auf Fokuspunkte innerhalb des photopolymerisierbaren Materials fokussiert wird, wodurch jeweils ein am Fokuspunkt befindliches Volumenelement des Materials mittels Multiphotonenabsorption verfestigt wird. Zu diesem Zweck wird ein Laserstrahl von einer Strahlungsquelle 3 ausgesendet, durch einen Pulskompressor 4 geleitet und nach einer Verringerung des Strahldurchmessers durch das optische Element 5 mit einem akustooptischen Modulator 6 moduliert, um die Strahlungsintensität zu verändern. Nach einer Strahlaufweitung mittels des optischen Elements 7 wird der Strahl durch einen akustooptischen Deflektor 8 geleitet, mit dem der Strahl zur Ausführung einer Querbewegungskomponente abgelenkt wird. Der Strahl nullter Ordnung wird in einer Strahlfalle 9 aufgefangen. Der Strahl erster Ordnung wird über ein Relay-System 10 zu einem Umlenkspeigel 11 geleitet, welcher den Strahl in Richtung zur optische Abbildungseinheit 12 umgelenkt.

Die Strahlen erreichen die optische Abbildungseinheit 12 dabei über eine Ablenkeinheit 13, welche die Verlagerung des Fokuspunkts entlang der Hautpfadkomponente bewerkstelligt und einen ersten Galvanometerscanner 14 und einen zweiten Galvanometerscanner 15 umfasst, deren Ablenkrichtung in einem rechten Winkel zueinander verlaufen. Die optische Abbildungseinheit 12 umfasset ein Objektiv, welches den Strahl innerhalb eines Schreibbereichs fokussiert in das Material 2 einbringt. Der erste Galvanometerscanner 14 lenkt den Strahl so ab, dass der Strahl in einer x-Ebene entlang des Hauptpfads verlagert wird und der zweite Galvanometerscanner 15 lenkt den Strahl so ab, dass der Strahl in einer y-Richtung entlang des Hauptpfads verlagert wird. Die x- und die y-Richtungen spannen eine x-y-Ebene auf, die senkrecht zur z-Richtung verläuft, welche im Wesentlichen der Einstrahlrichtung des Strahls in das Material 2 entspricht.

Durch Verlagerung des Fokuspunkts in der x-y-Ebene können Volumenelemente innerhalb eines zweidimensionalen Schreibbereichs der optischem Abbildungseinheit 12 erzeugt werden. Wenn das herzustellende Bauteil in x- und/oder y-Richtung größer ist als der Schreibbereich der optischen Abbildungseinheit 12, werden Teilstrukturen des Bauteils nebeneinander aufgebaut (sog. Stitching). Dazu ist der Träger 1 auf einem Kreuztisch angeordnet, der in x- und/oder y-Richtung relativ zur optische Abbildungseinheit 12 verschiebbar ist.

Um das Bauteil schichtweise aufzubauen, werden im Material 2 Volumenelemente einer Schicht nach der anderen verfestigt. Zum Aufbau einer ersten Schicht wird der Strahl jeweils nacheinander auf Fokuspunkte, die in der Fokusebene der optische Abbildungseinheit 12 angeordnet sind, innerhalb des Materials 2 fokussiert. Für den Wechsel in die nächste Ebene wird die an einem Träger 16 befestigte optische Abbildungseinheit 12 in z-Richtung relativ zum Träger 1 um den Schichtlagenabstand verstellt. Alternativ kann auch der Träger 1 relativ zur feststehenden optische Abbildungseinheit 12 verstellt werden.

Weiters ist eine Steuerung 17 vorgesehen, welche die Ablenkeinheit 13, den akustooptischen Deflektor 8, den akustooptischen Modulator 6, den Höhenversteller 16 und den am Kreuztisch 1 ansteuert.

In Fig. 2 ist die Verlagerung des Fokuspunkts schematisch dargestellt. Fig. 2a zeigt eine herkömmliche Verfahrensweise, bei welcher der Fokuspunkt z.B. von einem Galvanometerscanner entlang des Hauptpfads 18 durch das Material 2 bewegt wird, während ein akustooptischer Modulator die Belichtungsdosis derart moduliert, dass entlang einer Linie 19 eine Reihe von Volumenelementen 20, nämlich die Volumenelemente "1", "2", "3" und "4", entsteht.

Fig. 2b zeigt die erfindungsgemäße Ausbildung, bei der die Bewegungskomponente entlang des Hauptpfads 18 von einer schnelleren Querbewegungskomponente 21 überlagert wird, sodass sich die resultierende Verlagerung des Fokuspunkts entlang der Strecke 22 ergibt. Im rechten Teil der Fig. 2b ist die Anordnung der Volumenelemente "1", "2", "3" und "4" entlang der Strecke 22 dargestellt. Nach Erreichen der Position für das Volumenelement "4" springt die Querbewegungskomponente des Strahls auf die Anfangsposition zurück, sodass die Volumenelemente "5", "6", "7" und "8" parallel zur Strecke 22 versetzt entstehen können. Mit anderen Worten können dadurch im Vergleich zur Ausbildung gemäß Fig. 2a im Wesentlichen gleichzeitig Volumenelemente entlang der parallelen Linien 23, 24, 25 und 26 geschrieben und dadurch der Schreibbereich quer zur Hauptpfadrichtung vergrößert werden, ohne dass die Geschwindigkeit der Hauptpfadbewegungskomponente erhöht werden muss.

Die Strahlungsintensität kann nun auf verschiedene Weise mittels des akustooptischen Modulators moduliert werden. Beispielsweise ist in Fig. 2c dargestellt, dass die Strahlungsintensität zwischen einem hohen und einem niedrigen Wert gewechselt wird, sodass nur die Volumenelemente "1", "3" etc., nicht aber die Volumenelemente "2", "4" etc. geschrieben werden. Dadurch gelingt es, die Dichte der Linien bzw. den Abstand zwischen Volumenelementen zu variieren.

Fig. 2d zeigt die Geometrie eines aufzubauenden Bauteils 27 in einem in der x-y-Ebene verlaufenden Querschnitt. In den Bereichen 28 und 29 wurde die Verfahrensweise gemäß Fig. 2a gewählt. Im Bereich 30 wurde die Verfahrensweise gemäß Fig. 2b gewählt. Es ist ersichtlich, dass hiermit ein breiter Schreibbereich erzielt werden kann, wobei gleichzeitig eine Anpassung an die schräge Außenkontur des Bauteils 27 gelingt.

## Patentansprüche

1. Verfahren zur lithographiebasierten generativen Fertigung eines dreidimensionalen Bauteils, bei dem ein von einer elektromagnetischen Strahlungsquelle (3) ausgesendeter Strahl mittels einer optischen Abbildungseinheit (12) auf einen Fokuspunkt innerhalb eines Materials (2) fokussiert wird, um eine Belichtungsdosis in das Material einzubringen, und der Fokuspunkt mittels eines der optischen Abbildungseinheit (12) in Strahlrichtung vorgeordneten Ablenksystems verlagert wird, und ein am Fokuspunkt jeweils befindliches Volumenelement des Materials (1) mittels Multiphotonenabsorption verfestigt wird, **dadurch gekennzeichnet, dass** die Verlagerung des Fokuspunkts eine erste Bewegungskomponente (18), nämlich eine insbesondere kontinuierliche Verlagerung entlang eines Hauptpfads umfasst, die von einer zweiten Bewegungskomponente (21), nämlich einer quer dazu verlaufenden, wiederholten Querbewegung überlagert wird, und dass die Belichtungsdosis während der Querbewegung moduliert wird.

2. Verfahren nach Anspruch 1, **dadurch gekennzeichnet, dass** die Belichtungsdosis derart moduliert wird, dass während der Querbewegung eine Mehrzahl von Volumenelementen ausgebildet wird.

3. Verfahren nach Anspruch 1 oder 2, **dadurch gekennzeichnet, dass** die Belichtungsdosis derart moduliert wird, dass der Abstand in Querrichtung zwischen aufeinanderfolgend ausgebildeten Volumenelementen variiert wird.

4. Verfahren nach Anspruch 1, 2 oder 3, **dadurch gekennzeichnet, dass** die Belichtungsdosis derart moduliert wird, dass während der Querbewegung Volumenelemente unterschiedlichen Volumens ausgebildet werden.

5. Verfahren nach einem der Ansprüche 1 bis 4, **dadurch gekennzeichnet, dass** die Belichtungsdosis durch Veränderung der Strahlungsintensität des Strahls moduliert wird.

6. Verfahren nach einem der Ansprüche 1 bis 5, **dadurch gekennzeichnet, dass** die Strahlungsintensität mittels eines akustooptischen Modulators (6) verändert wird.

7. Verfahren nach einem der Ansprüche 1 bis 6, **dadurch gekennzeichnet, dass** die Strahlungsintensität pulsartig zwischen einem hohen und einem niedrigen Wert geändert wird und das Tastverhältnis variiert wird, um die Anzahl der Volumenelemente pro Volumeneinheit im Bauteil zu verändern.

8. Verfahren nach einem der Ansprüche 1 bis 7, **dadurch gekennzeichnet, dass** die Querbewegung als wiederholte Hin- und Herbewegung ausgebildet ist.

9. Verfahren nach einem der Ansprüche 1 bis 8, **dadurch gekennzeichnet, dass** die Amplitude der Querbewegung, insbesondere der Hin- und Herbewegung, variiert wird.

10. Verfahren nach einem der Ansprüche 1 bis 9, **dadurch gekennzeichnet, dass** die Querbewegung durch Ablenkung des Strahls mittels wenigstens eines akustooptischen Deflektors (8) erzeugt wird.

11. Verfahren nach Anspruch 10, **dadurch gekennzeichnet, dass** der Strahl unmittelbar vor dem akustooptischen Deflektor (8) derart konvergiert wird, dass eine vom akustooptischen Deflektor (8) bewirkte Divergenz des Strahls zumindest teilweise, im Wesentlichen vollständig, kompensiert wird.

12. Verfahren nach Anspruch 10 oder 11, **dadurch gekennzeichnet, dass** im akustooptischen Deflektor (8) eine akustische Longitudinalwelle erzeugt wird.

13. Verfahren nach Anspruch 10, 11 oder 12, **dadurch gekennzeichnet, dass** die Querbewegung durch Ablenkung des Strahls mittels zweier im Strahlengang hintereinander angeordneter akustooptischer Deflektoren (8) erzeugt wird, deren Ablenkrichtungen in einem vorzugsweise rechten Winkel zueinander verlaufen.

14. Verfahren nach einem der Ansprüche 10 bis 13, **dadurch gekennzeichnet, dass** der Strahldurchmesser entlang des Strahlengangs verändert wird, sodass der Strahl beim Durchlaufen des akustooptischen Modulators (6) geringer ist als beim Durchlaufen des akustooptischen Deflektors (8).

15. Vorrichtung zur lithographiebasierten generativen Fertigung eines dreidimensionalen Bauteils, insbesondere zur Durchführung eines Verfahrens nach einem der Ansprüche 1 bis 14, umfassend einen Materialträger (1) für ein verfestigbares Material (2) und eine Bestrahlungseinrichtung, die zur ortsselektiven Bestrahlung des verfestigbaren Materials mit wenigstens einem Strahl ansteuerbar ist, wobei die Bestrahlungseinrichtung ein Ablenksystem und eine dem Ablenksystem nachgeordnete optische Abbildungseinheit (12) umfasst, mit welcher der Strahl auf einen Fokuspunkt innerhalb des Materials (2) fokussierbar ist, um eine Bellichtungsdosis in das Material (2) einzubringen, und der Fokuspunkt mittels des Ablenksystems verlagerbar ist, wodurch jeweils ein am Fokuspunkt befindliches Volumenelement des Materials (2) mittels Multiphotonenabsorption verfestigbar ist, **dadurch gekennzeichnet, dass** das Ablenksystem ein erstes Ablenkmodul (13) zur Erzeugung einer ersten Bewegungskomponente (18) und ein zweites Ablenkmodul (8) zur Erzeugung einer zweiten Bewegungskomponente (21) der Verlagerung des Fokuspunkts umfasst, wobei die erste Bewegungskomponente (18) eine insbesondere kontinuierliche Verlagerung entlang eines Hauptpfads ist, und die zweite Bewegungskomponente (21) eine quer dazu verlaufende, wiederholte Querbewegung ist, und dass Mittel zur Modulierung der Belichtungsdosis während der Querbewegung vorgesehen sind.

16. Vorrichtung nach Anspruch 15, **dadurch gekennzeichnet, dass** die Belichtungsdosis derart moduliert wird, dass während der Querbewegung eine Mehrzahl von Volumenelementen ausgebildet wird.

17. Vorrichtung nach Anspruch 15 oder 16, **dadurch gekennzeichnet, dass** die Belichtungsdosis derart moduliert wird, dass der Abstand zwischen aufeinanderfolgend ausgebildeten Volumenelementen variiert wird.

18. Vorrichtung nach Anspruch 15, 16 oder 17, **dadurch gekennzeichnet, dass** die Belichtungsdosis derart moduliert wird, dass während der Querbewegung Volumenelemente unterschiedlichen Volumens ausgebildet werden.

19. Vorrichtung nach einem der Ansprüche 15 bis 18, **dadurch gekennzeichnet, dass** die Mittel zur Modulierung der Belichtungsdosis ausgebildet sind, um die Strahlungsintensität des Strahls zu verändern.

20. Vorrichtung nach einem der Ansprüche 15 bis 19, **dadurch gekennzeichnet, dass** die Mittel zur Modulierung der Belichtungsdosis einen akustooptischen Modulator (6) aufweisen.

21. Vorrichtung nach einem der Ansprüche 15 bis 20, **dadurch gekennzeichnet, dass** eine Steuereinheit (17) zur Ansteuerung des akustooptischen Modulators (6) vorgesehen ist, die ausgebildet ist, um die Strahlungsintensität pulsartig zwischen einem hohen und einem niedrigen Wert zu ändern, wobei das Tastverhältnis variierbar ist, um die Anzahl der Volumenelemente pro Volumeneinheit im Bauteil zu verändern.

22. Vorrichtung nach einem der Ansprüche 15 bis 21, **dadurch gekennzeichnet, dass** das zweite Ablenkmodul (8) ausgebildet ist, um die Querbewegung als wiederholte Hin- und Herbewegung auszuführen.

23. Vorrichtung nach einem der Ansprüche 15 bis 22, **dadurch gekennzeichnet, dass** das zweite Ablenkmodul (8) ausgebildet ist, um die Amplitude der Querbewegung, insbesondere der Hin- und Herbewegung, zu variieren.

24. Vorrichtung nach einem der Ansprüche 15 bis 23, **dadurch gekennzeichnet, dass** das zweite Ablenkmodul (8) wenigstens einen akustooptischen Deflektor aufweist.

25. Vorrichtung nach Anspruch 24, **dadurch gekennzeichnet, dass** das zweite Ablenkmodul (8) zwei im Strahlengang hintereinander angeordnete akustooptische Deflektoren aufweist, deren Ablenkrichtungen in einem vorzugsweise rechten Winkel zueinander verlaufen.

26. Vorrichtung nach Anspruch 24 oder 25, **dadurch gekennzeichnet, dass** im Strahlengang wenigstens eine optische Einrichtung zur Veränderung des Strahldurchmesser angeordnet ist, sodass der Strahl beim Durchlaufen des akustooptischen Modulators (6) geringer ist als beim Durchlaufen des akustooptischen Deflektors (8).
